# EUROPEAN PATENT APPLICATION

(11) **EP 1 176 490 A2**
(43) Date of publication of application: **30.01.2002**
(21) Application number: 01300991.5
(22) Date of filing: 05.02.2001
(51) Int. Cl.: G06F 1/00

(54) **Apparatus and method for the distribution of encrypted contents**

(30) Priority: 19.07.2000 JP 2000218408
(71) Applicant: Hitachi Ltd., Tokyo (JP)
(72) Inventor: Kawatsura, Yoshiaki, c/o Hitachi Ltd., Int. Pr. Of, Chiyoda-ku, Tokyo 100 (JP); Chiba, Hiroyuki, c/o Hitachi Ltd., Int. Pr. Office, Chiyoda-ku, Tokyo 100 (JP); Watanabe, Kiyoshi, c/o Hitachi Ltd., Int. Pr. Off., Chiyoda-ku, Tokyo 100 (JP); Morita, Akira, c/o Hitachi Ltd., Int. Prop. Office, Chiyoda-ku, Tokyo 100 (JP); Tomiyama, Tomochika, c/o Hitachi Ltd., Int. Pr. O., Chiyoda-ku, Tokyo 100 (JP); Akutsu, Takeshi, c/o Hitachi Ltd., Int. Pr. Office, Chiyoda-ku, Tokyo 100 (JP)
(74) Representative: Calderbank, Thomas Roger

(57) **Abstract**

Recipient machine sends a contents request message with recipient's public key to entitlement granter machine. On the entitlement granter machine, digital rights data relevant to the contents request is encrypted with the recipient's public key. Encrypted digital rights data with the entitlement granter's digital signature thereon is returned to recipient machine. On the recipient machine, encrypted digital rights data is decrypted with the recipient's secret key. The recipient machine sends a message containing digital rights data thus decrypted, recipient's public key, and the above encrypted data to contents distributor machine. The contents distributor machine, after verifying the above digital signature, encrypts the received digital rights data with the recipient's public key, verifies the match between this encrypted data and the encrypted data existing in the message received, which authenticates the valid recipient, and encrypts contents data with the recipient's public key and send encrypted contents to the recipient machine.

## Description

The present invention relates to contents distribution method and system, particularly to those designed to verify that the sender of a request to get contents by a contents distribution service over a communication network is entitled to receive the contents.

When types of contents are delivered from a contents distributor to recipients of contents across a communication network, it may be desirable to verify that a recipient is the true one to receive the contents. In this case, in general, when the contents distributor is requested to deliver contents to a recipient, it verifies that the recipient is valid for receiving the contents before the recipient receives the contents. In order to prevent password stealing over the network or snatching the received contents, a Secure Socket Layer (SSL) that is a means for encryption of a communication path is generally used.

Meanwhile, the Internet Engineer Task Force (IETF), an international standardization organization, is now making efforts to standardize an Internet Open Trading Protocol (IOTP). In the IOTP, an entitlement granter that entitles a recipient to receive contents and a distributor of the contents to the recipient are separate. Information about contents and information that a recipient is entitled to receive the contents are collected from a server working as the entitlement granter, and the appropriate information is sent from a recipient to the contents distributor so that the contents distributor will deliver the contents to the recipient.

The conventional contents distribution method according to the IOTP has the following problems.

If a plurality of contents distributors exists to carry out the contents distributing service to recipients, a third-party organization may participate in this service to function as an agency for managing the delivery of contents en block. In this case, there is a possibility that the third-party organization copies contents and uses them. When distributing contents to a recipient, if the contents distributor wants to obtain information about the recipient (information such as the address of the recipient if an article of goods is sent thereto or questionnaire information), it receives such information indirectly via the third-party organization as the agency. Even if the third party tampered with this information, there are no ways of detecting that.

Under existing circumstances, the IOTP does not provide a mechanism of verifying that a recipient is the true one to receive the contents. It is possible that if a recipient transfers the data obtained heretofore to another person, another person can receive contents thereafter.

An object of the present invention is to provide contents distribution method and system whereby an entitlement granter that entitles a recipient to receive contents and a contents distributor are distinctly separated, and thus the entitlement granter is not involved in the management of the contents data to be delivered to the recipient, and only the recipient entitled to receive the contents by the entitlement granter can receive the contents in safety.

Another object of the invention is to provide contents distribution method and system whereby the contents distributor can correctly receive information from a valid contents recipient.

With the aim of attaining the above objects, the inventor proposes a contents distribution method through the use of a communication network over which a recipient machine, an entitlement granter machine, and a contents distributor machine are interconnected, comprising: a step to be taken on the recipient machine that is sending a message containing contents request information that the recipient wants to get specific contents to the entitlement granter machine; a step to be taken on the entitlement granter machine that comprises sequential actions of encrypting digital rights data relevant to the above contents request information with the recipient's public key, putting digital signature using the entitlement granter's secret key to the thus encrypted digital rights data, and sending the encrypted digital rights data with the entitlement granter's digital signature thereon to the recipient machine; a step to be taken on the recipient machine that comprises sequential actions of decrypting the above encrypted digital rights data with the recipient's secret key and sending a message containing digital rights data thus decrypted and the above encrypted digital rights data with the entitlement granter's digital signature thereon to the contents distributor machine; a step to be taken on the contents distributor machine that comprises sequential actions of verifying the entitlement granter's digital signature by using the entitlement granter's public key, encrypting the received digital rights data with the recipient's public key, making sure that the thus encrypted digital rights data matches with the encrypted digital rights data existing in the received message, encrypting contents data to be sent to the recipient machine with the recipient's public key, and sending the thus encrypted contents data to the recipient machine; and a step to be taken on the recipient machine that is decrypting the received encrypted contents data with the recipient's secret key.

The inventor also proposes a contents distribution method through the use of a communication network over which a recipient machine, an entitlement granter machine, and a contents distributor machine are interconnected, comprising: a step to be taken on the recipient machine that is sending a message containing the recipient's public key and contents request information that the recipient wants to get specific contents to the entitlement granter machine; a step to be taken on the entitlement granter machine that comprises sequential actions of encrypting digital rights data relevant to the above contents request information with the recipient's public key, putting digital signature using the entitlement granter's secret key to the thus encrypted digital rights data, and sending the encrypted digital rights data with the entitlement granter's digital signature thereon to the recipient machine; a step to be taken on the recipient machine that comprises sequential actions of decrypting the above encrypted digital rights data with the recipient's secret key and sending a message containing digital rights data thus decrypted, the above encrypted digital rights data with the entitlement granter's digital signature thereon, and the recipient's public key to the contents distributor machine; a step to be taken on the contents distributor machine that comprises sequential actions of verifying the entitlement granter's digital signature by using the entitlement granter's public key, encrypting the received digital rights data with the recipient's public key, making sure that the thus encrypted digital rights data matches with the encrypted digital rights data existing in the received message, encrypting contents data to be sent to the recipient machine with the recipient's public key, and sending the thus encrypted contents data to the recipient machine; and a step to be taken on the recipient machine that is decrypting the received encrypted contents data with the recipient's secret key.

The above contents distribution methods are further defined as follows. The methods further comprise: a step of sending an entry form for acquiring information about the recipient from the contents distributor machine to the recipient machine after the action of making sure of encrypted digital rights data matching is carried out on the contents distributor machine; a step to be taken on the recipient machine that comprises sequential actions of generating an entry form filled with data as a result of that the recipient enters necessary information into the received entry form, putting digital signature using the recipient's secret key to the entry form filled with data, and sending the entry form filled with data with the recipient's digital signature thereon to the contents distributor machine; and a step to be taken on the distributor machine that comprises sequential actions of verifying the recipient's digital signature by using the recipient's public key and sending the contents data encrypted with the recipient's public key to the recipient machine.

The above contents distribution methods are further defined as follows. When the entitlement granter machine sends the foregoing encrypted digital rights data to the recipient machine, a certificate that is objective authentication of the entitlement granter and includes the entitlement granter's public key is attached to the data. When the recipient machine sends the foregoing digital rights data to the contents distributor machine, the above certificate of the entitlement granter is attached to the data. The contents distributor machine verifies the above certificate of the entitlement granter and uses the entitlement granter's public key derived from the certificate of the entitlement granter when verifying the entitlement granter's digital signature.

The inventor also proposes a contents distribution system having a recipient machine, an entitlement granter machine, and a contents distributor machine interconnected over a communication network, comprising: a computer system built on the recipient machine and equipped with a means to send a message containing contents request information that the recipient wants to get specific contents to the entitlement granter machine, a means to decrypt encrypted digital rights data sent from the entitlement granter machine with the recipient's secret key, a means to send a message containing digital rights data thus decrypted and the encrypted digital rights data with the entitlement granter's digital signature thereon to the contents distributor machine, and a means to decrypt encrypted contents data sent from the contents distributor machine with the recipient's secret key; a computer system built on the entitlement granter machine and equipped with a means to encrypt digital rights data relevant to the above contents request information with the recipient's public key, a means to put the entitlement granter's digital signature generated by using the entitlement granter's secret key to the thus encrypted digital rights data, and a means to send the encrypted digital rights data with the entitlement granter's digital signature thereon to the recipient machine; and a computer system built on the contents distributor machine and equipped with a means to verify the entitlement granter's digital signature by using the entitlement granter's public key, a means to encrypt the received digital rights data with the recipient's public key and make sure that the thus encrypted digital rights data matches with the encrypted digital rights data existing in the message received, and a means to encrypt contents data to be sent to the recipient machine with the recipient's public key and send the thus encrypted contents data to the recipient machine.

The inventor also proposes a contents distribution system having a recipient machine, an entitlement granter machine, and a contents distributor machine interconnected over a communication network, comprising: a computer system built on the recipient machine and equipped with a means to send a message containing the recipient's public key and contents request information that the recipient wants to get specific contents to the entitlement granter machine, a means to decrypt encrypted digital rights data sent from the entitlement granter machine with the recipient's secret key, a means to send a message containing digital rights data thus decrypted, the encrypted digital rights data with the entitlement granter's digital signature thereon, and the recipient's public key to the contents distributor machine, and a means to decrypt encrypted contents data sent from the contents distributor machine with the recipient's secret key; a computer system built on the entitlement granter machine and equipped with a means to encrypt digital rights data relevant to the above contents request information with the recipient's public key, a means to put the entitlement granter's digital signature generated by using the entitlement granter's secret key to the thus encrypted digital rights data, and a means to send the encrypted digital rights data with the entitlement granter's digital signature thereon to the recipient machine; and a computer system built on the contents distributor machine and equipped with a means to verify the entitlement granter's digital signature by using the entitlement granter's public key, a means to encrypt the received digital rights data with the recipient's public key and make sure that the thus encrypted digital rights data matches with the encrypted digital rights data existing in the message received, and a means to encrypt contents data to be sent to the recipient machine with the recipient's public key and send the thus encrypted contents data to the recipient machine.

The above contents distribution systems are further defined as follows. The computer system built on the contents distributor machine is further equipped with a means to send an entry form for acquiring information about the recipient to the recipient machine after making sure of encrypted digital rights data matching. The computer system built on the recipient machine is further equipped with a means to generate an entry form filled with data as a result of that the recipient enters necessary information into the received entry form, put digital signature using the recipient's secret key to the entry form filled with data, and send the entry form filled with data with the recipient's digital signature thereon to the contents distributor machine. The computer system built on the contents distributor machine is further equipped with a means to verify the recipient's digital signature by using the recipient's public key and then send the contents data encrypted with the recipient's public key to the recipient machine.

The above contents distribution systems are further defined as follows. The means to send the foregoing encrypted digital rights data to the recipient machine, provided on the entitlement granter machine attaches a certificate that is objective authentication of the entitlement granter and includes the entitlement granter's public key to the data to send. The means to send the foregoing digital rights data to the contents distributor, provided on the recipient machine attaches the above certificate of the entitlement granter to the data to send.

The means to verify the entitlement granter's digital signature, provided on the contents distributor machine verifies the above certificate of the entitlement granter and uses the entitlement granter's public key derived from the certificate of the entitlement granter when verifying the entitlement granter's digital signature.

According to the present invention, only a valid recipient entitled to receive contents can decrypt the contents with the recipient's secret key on the recipient machine. Therefore, only the valid recipient can receive the contents.

As described above, after executing the encrypted digital rights data matching check, the contents distributor machine sends an entry form to the recipient machine. After the entry form is filled with data, the form with the recipient's digital signature using the recipient's secret key put thereon is sent back. In this way, the contents distributor machine can receive the entry form filled with data that is assured of being not tampered with from a valid recipient.

Other and further objects, features and advantages of the invention will appear more fully from the following description.

### IN THE DRAWINGS:

Fig. 1 is a diagram showing the conceptual structure of a preferred embodiment of a contents distributing/receiving system to which the present invention is applied;
Fig. 2 is a block diagram showing the configuration of a recipient's computer system built on the recipient machine;
Fig. 3 is a block diagram showing the configuration of an entitlement granter's computer system built on the entitlement granter machine;
Fig. 4 is a block diagram showing the configuration of a contents distributor's computer system built on the contents distributor machine;
Fig. 5 is an overall flowchart illustrating message transfer between the machines in the contents distributing/receiving system implementation for offering of digital prizes as an internet business on the assumption that digital contents as giveaways are distributed/received;
Fig. 6 shows the data structure of a message of request to be entitled to get contents to be sent to the entitlement granter machine;
Fig. 7 shows the data structure of digital rights data;
Fig. 8 shows the data structure of encrypted digital rights data with digital signature thereon; and
Fig. 9 shows the data structure of a message of request to deliver contents.

Preferred embodiments of the present invention will be described below in detail with reference to the drawings.

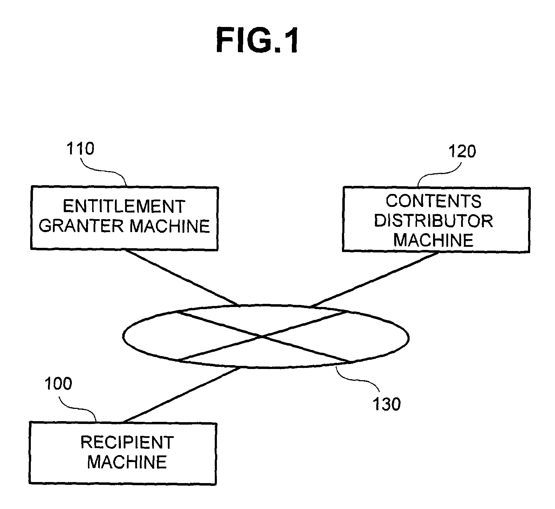

Fig. 1 is a diagram showing the conceptual structure of a preferred embodiment of a contents distributing/receiving system to which the present invention is applied. In the following description of the present embodiment, advertisement offering digital prizes is assumed to be implemented as an internet business and the contents distributing/receiving system used to distribute/receive digital contents as giveaways will be discussed as an example.

As shown in Fig. 1, the contents distributing/receiving system as the present embodiment is having a recipient machine 100, an entitlement granter machine 110, and a contents distributor machine 120 interconnected over a network 130. On the recipient machine 100, a recipient's computer system is built that is used to apply for prizes and receive some digital contents as a giveaway if the applicant wins a prize. On the entitlement granter machine 110, an entitlement granter's computer system is built that is used to mail the advertisement offering prizes, accept the application for prizes, carry out drawing lots, announce winning lots, and issue digital rights data that is equivalent to authorization that authorizes the recipient who wins a prize to receive digital contents as a giveaway. On the contents distributor machine 120, a computer system is built that is operated by the contents distributor to actually manage digital contents and send the digital contents to a valid recipient. In the system implementation for offering of prizes, various kinds of information are transferred among the machines 100, 110, and 120 over the network 130.

As the machines 100, 110, and 120 on which each computer system is built, computers such as personal computers and workstations that are now generally and widely used may be used. These computers may be larger so-called general-purpose computers. Alternatively, instead of each individual computer, a computer system comprising a plurality of computers interconnected over a LAN of the organization where the host computer is installed may apply, provided it can implement the functions of each computer system that will be described later. Although three machines are interconnected over the network 130 as shown, the number of interconnected computer systems built on the machines is not limited to three and the network can interconnect any number of machines on which computer systems are built.

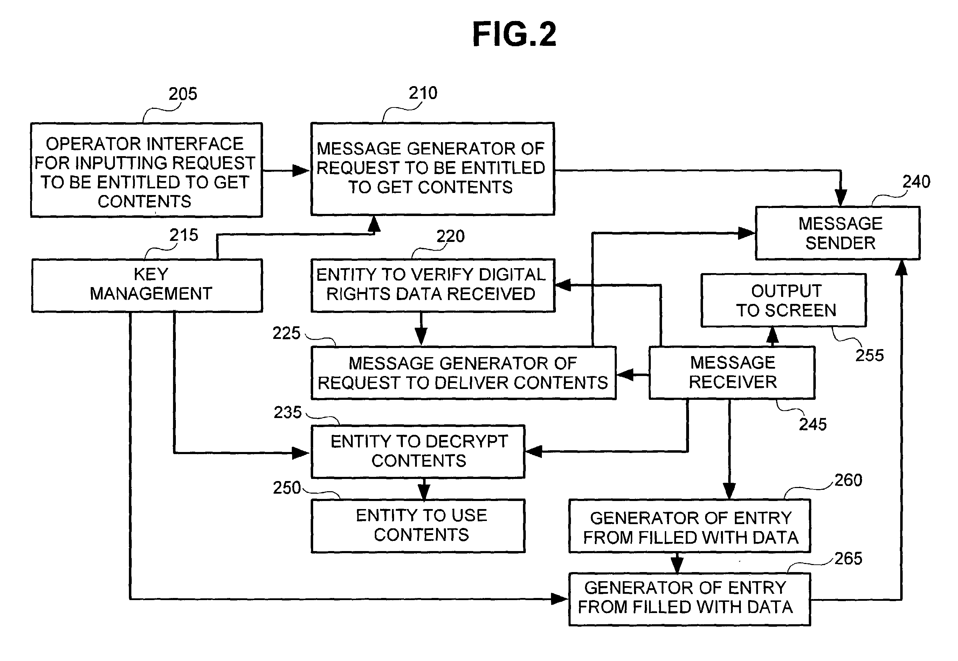

Fig. 2 is a block diagram showing the configuration of a computer system built on the recipient machine 100, a recipient of contents making use of the system. In this figure, the configuration shown comprises of essential entities to provide functions required for the system implementation of offering of prizes in the present embodiment. The computer system built on the recipient machine 100 may be provided with other functions. Functional components not having direct relation with the present invention are neither shown nor described herein.

As shown in Fig. 2, the computer system built on the recipient machine 100 is equipped with an operator interface for inputting request to be entitled to get contents 205, a message generator of request to be entitled to get contents 210, a key management 215, an entity to verify digital rights data received 220, a message generator of request to deliver contents 225, an entity to decrypt contents 235, a message sender 240, a message receiver 245, an entity to use contents 250, an output to screen 255, a generator of entry form filled with data 260, and a generator of entry form filled with data with digital signature thereon 265.

The operator interface for inputting request to be entitled to get contents 205 allows an operator who applies for prizes and may receive contents as a recipient to enter information for specifying contents the operator wants to get. This information may be given in advance from the entitlement granter and input as such.

The key management 215 retains the recipient's secret key that is a private key of the recipient and shall not be opened to anyone else and the recipient's public key that is a counterpart mating with the recipient's secrete key and may be open to a third party.

The message generator of request to be entitled to get contents 210 couples the recipient's public key retrieved from the key management 215 on to the data of request to be entitled to get contents delivered from the operator interface for inputting request to be entitled to get contents 205 and thus generates a message of request to be entitled to get contents. The message is delivered to the message sender 240 from which it is sent to the entitlement granter machine 110. Although the recipient's public key and the data of request to be entitled to get contents are coupled in this context, they may be separately sent to the entitlement granter machine. If they are separately sent, the entitlement granter may obtain the recipient's public key in advance or after the above message of request to be entitled to get contents is sent thereto.

The entity to verify digital rights data received 220 receives encrypted digital rights data from the message receiver 245 and decrypts the digital rights data with the recipient's secret key retrieved from the key management 215. By making sure that the digital rights data can be decrypted with the recipient's secret key, it can be verified that the digital rights data has been given to the recipient who has received it properly.

The message generator of request to deliver contents 225 receives decrypted digital rights data from the entity to verify digital rights data received 220 and encrypted digital rights data with digital signature thereon from the message receiver 245. The message generator of request to deliver contents 225 generates a message of request to deliver contents. This message is delivered to the message sender 240 from which it is sent to the contents distributor machine 120.

The entity to decrypt contents 235 receives encrypted contents from the message receiver 245 and decrypts the contents with the recipient's secrete key retrieved from the key management 215. The decrypted contents are delivered to the entity to use contents 250.

The generator of entry form filled with data 260 enters data into an entry form that it received from the message receiver 245 and generates an entry form filled with data 260. The generator of entry form filled with data with digital signature thereon 265 puts digital signature using the recipient's secret key retrieved from the key management 215 to the entry form filled with data that it received from the generator of entry form filled with data 260. This generator 265 thus generates the entry form filled with data with the recipient's digital signature thereon and delivers it to the message sender 240.

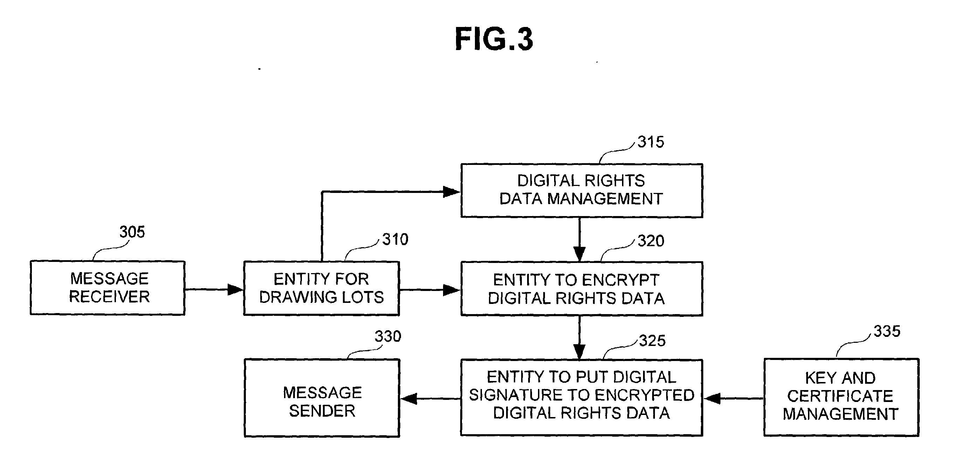

Fig. 3 is a block diagram showing the configuration of an entitlement granter's computer system built on the entitlement granter machine 110. In this figure, the configuration shown comprises of essential entities to provide functions required for the system implementation of offering of prizes in the present embodiment. The computer system built on the entitlement granter machine 110 may be provided with other functions. Functional components not having direct relation with the present invention are neither shown and nor described herein.

As shown in Fig. 3, the computer system built on the entitlement granter machine 110 is equipped with a message receiver 305, an entity for drawing lots 310, a digital rights data management 315, an entity to encrypt digital rights data 320, an entity to put digital signature to encrypted digital rights data 325, a message sender 330, and a key and certificate management 335.

The entity for drawing lots 310 receives a request to be entitled to get contents from the message receiver 305 and determines whether the sender of the request wins a prize by lot so as to be entitled to receive the contents.

If the entity for drawing lots 310 determines that the request sender is entitled to receive the contents, the entity to encrypt digital rights data 320 retrieves digital rights data from the digital rights data management 315, based on the message of the request to be entitled to get contents, and encrypts the digital rights data with the recipient's public key attached to the above message so that only the entitled recipient can exercise the right of the digital rights data. The digital rights data management 315 retains digital rights data for valid entitlement.

On receiving the encrypted digital rights data generated by the entity to encrypt digital rights data 320, the entity to put digital signature to encrypted digital rights data 325 generates digital signature data to authenticate that the entitlement granter has generated the encrypted digital rights data by using the entitlement granter's secret key retrieved from the key and certificate management 335 and puts the entitlement granter's digital signature to the encrypted digital rights data. At the same time, an entitlement granter's certificate proving that a third-party organization approved by the contents distributor acknowledges that the entitlement granter's public key mating with the entitlement granter's secret key is the true public key of the entitlement granter is also attached to the encrypted digital rights data. The encrypted digital rights data with the entitlement granter's digital signature thereon, thus generated, is delivered to the message sender 330.

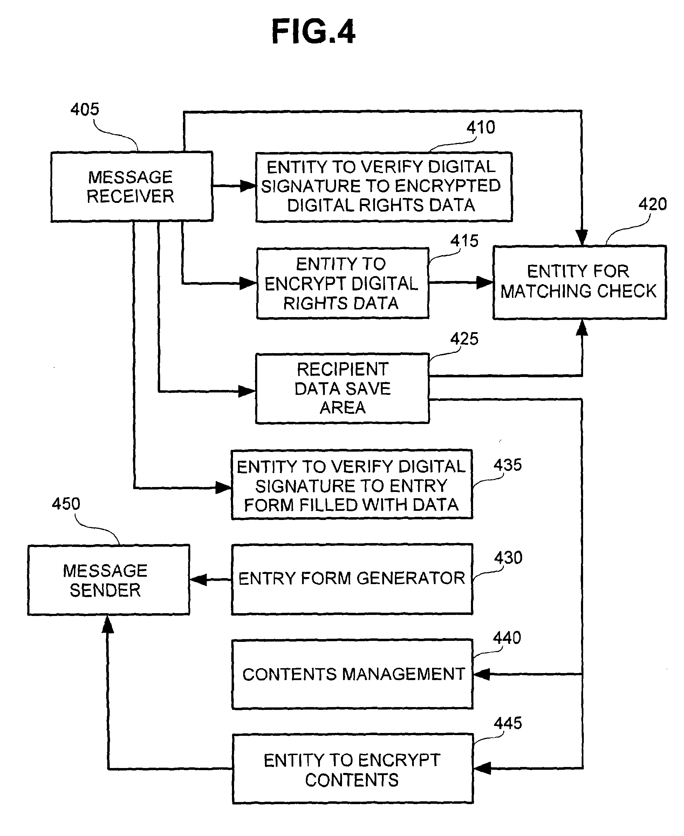

Fig. 4 is a block diagram showing the configuration of a contents distributor's computer system built on the contents distributor machine 120. In this figure, the configuration shown comprises of essential entities to provide functions required for the system implementation of offering of prizes in the present embodiment. The computer system built on the contents distributor machine 120 may be provided with other functions. Functional components not having direct relation with the present invention are neither shown and nor described herein.

As shown in Fig. 4, the computer system built on the contents distributor machine 120 is equipped with a message receiver 405, an entity to very digital signature to encrypted digital rights data 410, an entity to encrypt digital rights data 415, an entity for matching check 420, a recipient data save area 425, an entry form generator 430, an entity to verify digital signature to entry form filled with data 435, a contents management 440, an entity to encrypt contents 445, and a message sender 450.

The entity to very digital signature to encrypted digital rights data 410 verifies the digital signature information on the encrypted digital rights data included in the message of request to deliver contents that it received from the message receiver 405. This verification makes sure that the encrypted digital rights data is valid, that is, the data is issued from the entitlement granter authorized to execute entitlement.

The entity to encrypt digital rights data 415 receives the digital rights data and the recipient's public key from the message receiver 405 and encrypts the digital rights data with the recipient's public key. To verify that the recipient's public key in the encrypted digital rights data, thus generated by the entity to encrypt digital rights data 415, is identical to the key used when the recipient applied for prizes by lot, the entity for matching check 420 performs the matching check between the above encrypted digital rights data and the encrypted digital rights data existing in the message delivered thereto from the message receiver 405.

The entity to verify digital signature to entry form filled with data 435 verifies the recipient's digital signature on the entry form filled with data that it received from the message receiver 405 by using the recipient's public key retrieved from the recipient data save area 425, and then stores that entry form filled with data into the recipient data save area 425.

The entity to encrypt contents 445 retrieves contents relevant to the digital rights data retained in the recipient data save area 425 from the contents management 440, encrypts the contents with the recipient's public key retained in the recipient data save area 425, and delivers the encrypted contents to the message sender 450. Because the thus encrypted contents can be decrypted only by the possessor of the recipient's secret key, the counterpart mating with the recipient's public key by which the contents were encrypted, the contents can be delivered in safety to only the authorized recipient machine 100 that has been entitled to receive the contents by the entitlement granter machine 110.

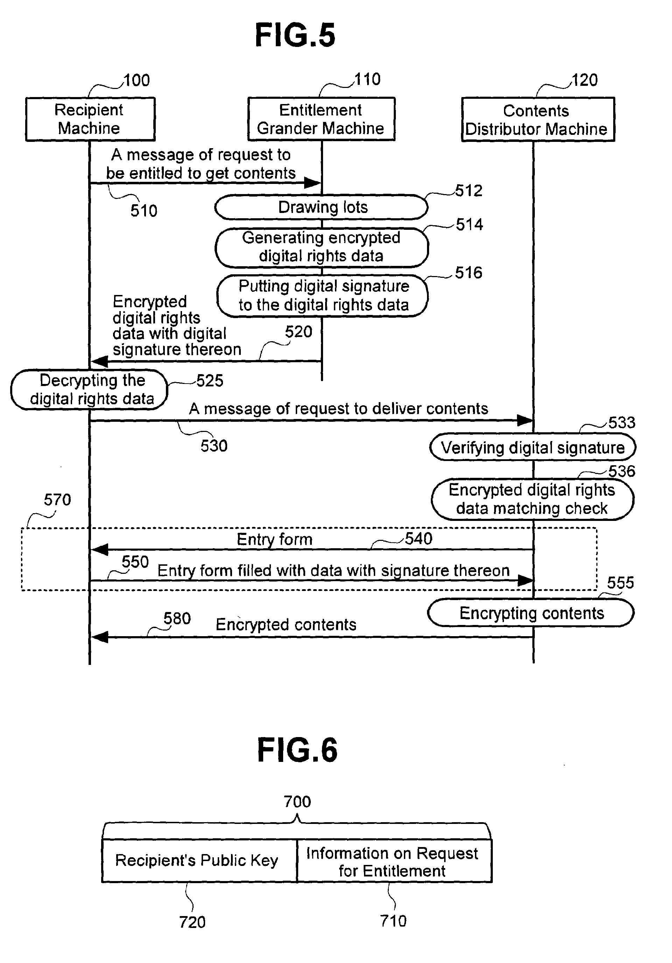

Fig. 5 is an overall flowchart illustrating message transfer between the machines in the contents distributing/receiving system of the present embodiment.

The recipient machine 100 is assumed to obtain in advance the information for application for prizes from the entitlement granter machine 110. The recipient's public key and its mating secret key are assumed to be retained beforehand in the key management 215.

In step 510, a person who wants to apply for prizes by lot enters the information on contents he or she wants to get through the operator interface for inputting request to be entitled to get contents 205 on the recipient machine 100, when information for request for entitlement is generated. Then, the recipient's public key is retrieved from the key management 215 and a message of request to be entitled to get contents is generated from the recipient's public key and the information for request for entitlement. This message is sent to the entitlement granter machine 110 in the step 510. Although, in the context herein, the message of request to be entitled to get contents is assumed to contain the recipient's public key and the information for request for entitlement as described above, the recipient's public key may be sent to the entitlement granter machine 110 separately from the above message of request. Alternatively, the entitlement granter machine 110 that receives the above message of request may autonomously obtain the recipient's public key opened online.

Fig. 6 shows the data structure of the message of request to be entitled to get contents to be sent to the entitlement granter machine 110. The message of request to be entitled to get contents 700 comprises of the information for request for entitlement 710 and the recipient's public key 720.

After the entitlement granter machine 110 receives the message of request to be entitled to get contents 700, its entity for drawing lots 310 determines whether the sender of the request draws a winning or losing number by lot (step 512). If the request sender draws a losing number, information that the sender drew a losing number is sent back to the recipient machine 100 and the processing terminates. If the request sender draws a winning number, digital rights data relevant to the information for request for entitlement 710 is retrieved from the digital rights data management 315.

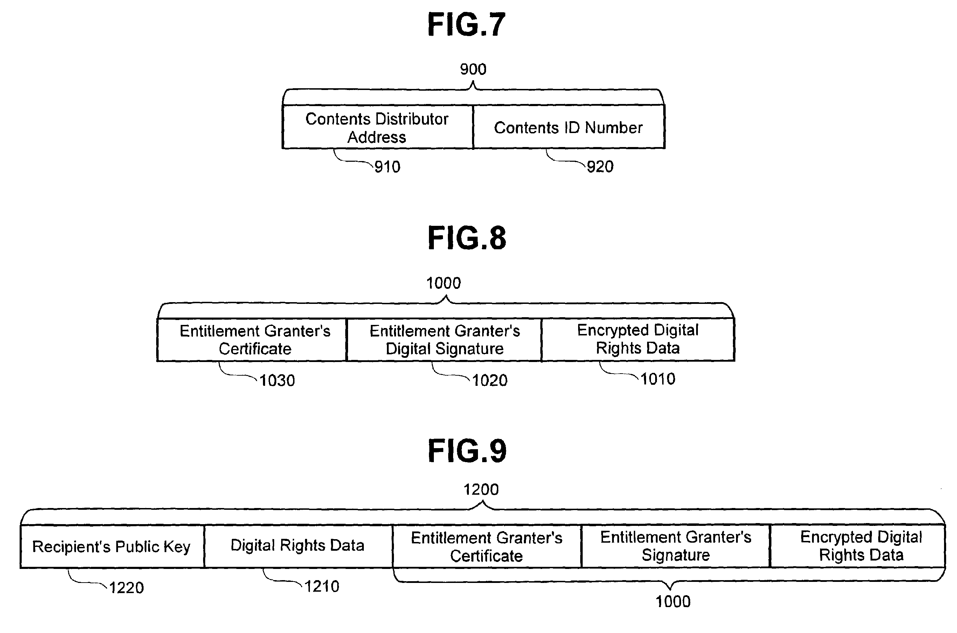

Fig. 7 shows the data structure of digital rights data. The digital rights data 900 comprises of a contents distributor address 910 that specifies where the contents distributor machine 120 is and contents ID information (number) 920 that identifies the contents to be distributed by the contents distributor machine 120.

Then, the digital rights data is encrypted with the recipient's public key 720 (step 514). This encryption limits its decryption so that only the recipient that possesses the recipient's secret key, the counterpart mating with the recipient's public key can decrypt the digital rights data, or in other words, only the recipient machine 100 of the recipient who drew a winning number can do. Following the digital rights data encryption, the entitlement granter's secret key is retrieved from the key and certificate management 335, entitlement granter's digital signature is put to the encrypted digital rights data, and its certificate including the entitlement granter's public key, the counterpart mating with the entitlement granter's secret key is also attached to the digital rights data, thereby assuring that the entitlement granter has generated the encrypted digital rights data (step 516). The encrypted digital rights data with signature thereon 1000, thus generated, is sent to the recipient machine 100 (step 520).

The digital signature is unique data that is obtained by using a predetermined hash function and passed between the machines involved. In this context, the digital signature is information obtained by determining a hashed value of the encrypted digital rights data and encrypting this value with the entitlement granter's secrete key. The hash function is a one-way function by which compressed data that can be uniquely bound to the original data can be created. The certificate is issued by a third party to contain information for objective authentication of its possessor. In this context, the certificate is data on which the third party puts the digital signature of its secret key information to the public key information corresponding to the secret key information privately used by the organization to be authenticated. Upon the reception of the certificate with the digital signature thereon, the organization that put their digital signature thereto can be identified by the digital signature.

Fig. 8 shows the data structure of the encrypted digital rights data with signature thereon. The encrypted digital rights data with signature thereon 1000 comprises of the encrypted digital rights data 1010 generated by encrypting the digital rights data 900 with the recipient's public key 720, the entitlement granter's digital signature 1020 that is the digital signature put to the encrypted digital rights data 1010, and the entitlement granter's certificate 1030 that is the certificate of the entitlement granter set in this field.

In the present embodiment, immediately after the entitlement granter machine 110 receives the information for request for entitlement 710, drawing lots is executed and the encrypted digital rights data with signature thereon 1000 is returned to the sender of the request if the sender draws a winning number. This processing, however, may be executed otherwise, for example, in the following way: the entitlement granter machine 110 accepts and accumulates messages of requests to be entitled to get contents sent from a plurality of recipient machines, drawing lots is executed for accumulated requests after a certain period, and the encrypted digital rights data with signature thereon 1000 is sent back to the request senders who drew a winning number, that is, won a prize. In this case, the encrypted digital rights data with signature thereon 1000 may be e-mailed to the recipient machines 100 of the recipients who won a prize or may go public on the World Wide Web (WWW) so that each recipient machine 100 may access the WWW server to obtain this information. Even if someone who did not win a prize attempts to obtain the encrypted digital rights data with signature thereon 1000, he or she cannot decrypt this data without the secret key of the recipient who won a prize.

To get back to Fig. 5, after the recipient machine 100 receives the encrypted digital rights data with signature thereon 1000, its entity to verify digital rights data received 220 retrieves the recipient's secret key from the key management 215 and decrypts the encrypted digital rights data 1010 by using this key (step 525). At this time, the recipient machine 100 may output the contents of the digital rights data 900 onto the screen, allowing the recipient to check on it. Then, the message generator of request to deliver contents 225 attaches the recipient's public key used for decryption and the decrypted digital rights data to the encrypted digital rights data with signature thereon 1000, thus making a message of request to deliver contents, and sends this message to the contents distributor machine 120 (step 530). At this time, the recipient machine sends the message to the contents distributor machine by referring to the contents distributor address 910 included in the digital rights data 900.

Fig. 9 shows the data structure of the message of request to deliver contents. The message of request to deliver contents 1200 includes the digital rights data 1210 and the recipient's public key 1220 (this is, in fact, identical to the recipient's public key 720) in addition to the encrypted digital rights data with signature thereon 1000.

After the contents distributor machine 120 receives the message of request to deliver contents 1200, its entity to very digital signature 410 checks the entitlement granter's digital signature 1020 by using the entitlement granter's certificate 1030 in step 533 to see whether the encrypted digital rights data 1010 has been issued from the entitlement granter that proves authentic to the contents distributor machine 120 and makes a judgment according to the result of the check. This check comprises checking to judge whether the certificate is the certificate of the entitlement granter under contract with the contents distributor for contents distribution and comparing a hashed value obtained by decrypting the digital signature by using the entitlement granter's public key information derived from the certificate and a hashed value derived from the encrypted digital rights data 1010. As the result of the judgment, if either the encrypted digital rights data or the entitlement granter's digital signature is invalid, the processing terminates after error processing is executed.

After the validity of the entitlement granter's digital signature is verified in the step 533, the entity to encrypt digital rights data 415 encrypts the digital rights data 1210 with the recipient's public key 1220. Then, matching check between the thus encrypted digital rights data and the encrypted digital rights data 1010 is executed. According to the result of this matching check, judgment is made to see whether the recipient's public key 1220 is identical to the public key 720 used when the recipient applied for prizes by lot and when the entitlement granter machine 110 generated the encrypted digital rights data (step 536). If the judgment result is mismatch, the processing terminates after error processing is executed.

If, by the matching check in the step 536, it has been verified that the recipient's public key 1220 is identical to the public key 720 used when the recipient applied for prizes by lot and when the entitlement granter machine 110 generated the encrypted digital rights data, the appropriate contents are retrieved from the contents management 440 by using the contents ID information (number) 920 included in the digital rights data 900 retained in the recipient data save area 425. The entity to encrypt contents 445 encrypts the contents with the recipient's public key 720 (or 1220) (step 555) and the encrypted contents are sent back to the recipient machine 100 (step 560).

The recipient machine 100 receives the encrypted contents from the contents distributor machine 120 and its entity to decrypt contents 235 decrypts the contents with the recipient's secret key retrieved from the key management 215 and delivers the contents to the entity to use contents 250 where the contents are used.

In the above embodiment, after the match between both encrypted digital rights data has been verified by the machining check in the step 536, a recipient information acquisition phase (570) may start if necessary so that the contents distributor will receive recipient information such as questionnaires from the recipient. In this case, the contents distributor machine 120 generates an entry form about information to receive and sends the entry form to the recipient machine 100 (step 540). The recipient machine 100 displays the entry form on the screen through the output to screen 255. The recipient enters necessary information into the displayed form through the input device, thus generating an entry form filled with data. Digital signature is generated by using the recipient's secrete key and put to the entry form filled with data and the entry form filled with data with the recipient's digital signature thereon is sent back to the contents distributor machine in step 550. On the contents distributor machine 120, the recipient's digital signature is verified, based on the recipient's public key retrieved from the recipient data save area 425. Once it has been made sure that the sender of the entry form is the recipient who won a prize, the data in the entry form is saved into the recipient data save area 425. The recipient information acquisition phase (570) can be repeated if necessary.

Although digital contents are used as the prize giveaways in the foregoing embodiment, some goods may be used as the prize giveaways. In this case, to avoid the supply of false information on the address to which an article of goods is delivered, the delivered-to-address information must be obtained by using the recipient information acquisition phase (570).

Although, in the forging embodiment, the contents distributing/receiving system used to distribute/receive digital contents as giveaways was described as the system implementation for offering of digital prizes, the present invention can also be applied to a system implementation for distributing digital contents as giveaways, according to points gained and stored into credit cards.

As described above, according to the present invention, a third-party organization as the entitlement granter that entitles a recipient to receive contents is not involved in the management of contents data to be delivered to the recipient and only the entitled recipient can receive the contents in safety. The entitlement granter and the contents distributor need not directly transfer recipient information between them beforehand. The contents distributor need not create a database beforehand that is used for password management for recipient access authorization. The contents distributor can receive an entry form filled with data that is assured of being not tampered with from a valid recipient. This is effective particularly if the contents distributor delivers an article of goods as a giveaway to a recipient by mail because address information is surely obtained from a valid recipient.

The foregoing invention has been described in terms of preferred embodiments. However, those skilled, in the art will recognize that many variations of such embodiments exit. Such variations are intended to be within the scope of the present invention and the appended claims.

## Claims

1. A contents distribution method through the use of a communication network over which a recipient machine, an entitlement granter machine, and a contents distributor machine are interconnected, comprising:
a step to be taken on the recipient machine that is sending a message containing contents request information that the recipient wants to get specific contents to the entitlement granter machine;
a step to be taken on the entitlement granter machine that comprises sequential actions of encrypting digital rights data relevant to the contents request information with the recipient's public key, putting digital signature using the entitlement granter's secret key to the thus encrypted digital rights data, and sending the encrypted digital rights data with the entitlement granter's digital signature thereon to the recipient machine;
a step to be taken on the recipient machine that comprises sequential actions of decrypting the encrypted digital rights data with the recipient's secret key and sending a message containing digital rights data thus decrypted and the encrypted digital rights data with the entitlement granter's digital signature thereon to the contents distributor machine;
a step to be taken on the contents distributor machine that comprises sequential actions of verifying the entitlement granter's digital signature by using the entitlement granter's public key, encrypting the digital rights data with the recipient's public key, making sure that the thus encrypted digital rights data matches with the encrypted digital rights data, encrypting contents data to be sent to the recipient machine with the recipient's public key, and sending the thus encrypted contents data to the recipient machine; and
a step to be taken on the recipient machine that is decrypting the encrypted contents data with the recipient's secret key.

2. A contents distribution method through the use of a communication network over which a recipient machine, an entitlement granter machine, and a contents distributor machine are interconnected, comprising:
a step to be taken on the recipient machine that is sending a message containing the recipient' s public key and contents request information that the recipient wants to get specific contents to the entitlement granter machine;
a step to be taken on the entitlement granter machine that comprises sequential actions of encrypting digital rights data relevant to the contents request information with the recipient's public key, putting digital signature using the entitlement granter's secret key to the thus encrypted digital rights data, and sending the encrypted digital rights data with the entitlement granter's digital signature thereon to the recipient machine;
a step to be taken on the recipient machine that comprises sequential actions of decrypting the encrypted digital rights data with the recipient's secret key and sending a message containing digital rights data thus decrypted, the encrypted digital rights data with the entitlement granter's digital signature thereon, and the recipient's public key to the contents distributor machine;
a step to be taken on the contents distributor machine that comprises sequential actions of verifying the entitlement granter's digital signature by using the entitlement granter's public key, encrypting the digital rights data with the recipient's public key, making sure that the thus encrypted digital rights data matches with the encrypted digital rights data, encrypting contents data to be sent to the recipient machine with the recipient's public key, and sending the thus encrypted contents data to the recipient machine; and
a step to be taken on the recipient machine that is decrypting the encrypted contents data with the recipient's secret key.

3. The contents distribution method according to claim 1, further comprising:
a step of sending an entry form for acquiring information about the recipient from the contents distributor machine to the recipient machine after the action of making sure of encrypted digital rights data matching is carried out on the contents distributor machine;
a step to be taken on the recipient machine that comprises sequential actions of generating an entry form filled with data as a result of that the recipient enters necessary information into the entry form, putting digital signature using the recipient's secret key to the entry form filled with data, and sending the entry form filled with data with the recipient's digital signature thereon to the contents distributor machine; and
a step to be taken on the distributor machine that comprises sequential actions of verifying the recipient's digital signature by using the recipient's public key and sending the contents data encrypted with the recipient's public key to the recipient machine.

4. The contents distribution method according to claim 2, further comprising:
a step of sending an entry form for acquiring information about the recipient from the contents distributor machine to the recipient machine after the action of making sure of encrypted digital rights data matching is carried out on the contents distributor machine;
a step to be taken on the recipient machine that comprises sequential actions of generating an entry form filled with data as a result of that the recipient enters necessary information into the entry form, putting digital signature using the recipient's secret key to the entry form filled with data, and sending the entry form filled with data with the recipient's digital signature thereon to the contents distributor machine; and
a step to be taken on the distributor machine that comprises sequential actions of verifying the recipient's digital signature by using the recipient's public key and sending the contents data encrypted with the recipient's public key to the recipient machine.

5. The contents distribution method according to claim 1, wherein:
when the entitlement granter machine sends the encrypted digital rights data to the recipient machine, a certificate that is objective authentication of the entitlement granter and includes the entitlement granter's public key is attached to the data;
when the recipient machine sends the digital rights data to the contents distributor machine, the certificate of the entitlement granter is attached to the data; and
the contents distributor machine verifies the certificate of the entitlement granter and uses the entitlement granter's public key derived from the certificate of the entitlement granter when verifying the entitlement granter's digital signature.

6. The contents distribution method according to claim 2, wherein:
when the entitlement granter machine sends the encrypted digital rights data to the recipient machine, a certificate that is objective authentication of the entitlement granter and includes the entitlement granter's public key is attached to the data;
when the recipient machine sends the digital rights data to the contents distributor machine, the certificate of the entitlement granter is attached to the data; and
the contents distributor machine verifies the certificate of the entitlement granter and uses the entitlement granter's public key derived from the certificate of the entitlement granter when verifying the entitlement granter's digital signature.

7. The contents distribution method according to claim 3, wherein:
when the entitlement granter machine sends the encrypted digital rights data to the recipient machine, a certificate that is objective authentication of the entitlement granter and includes the entitlement granter's public key is attached to the data;
when the recipient machine sends the digital rights data to the contents distributor machine, the certificate of the entitlement granter is attached to the data; and
the contents distributor machine verifies the certificate of the entitlement granter and uses the entitlement granter's public key derived from the certificate of the entitlement granter when verifying the entitlement granter's digital signature.

8. A contents distribution system having a recipient machine, an entitlement granter machine, and a contents distributor machine interconnected over a communication network, comprising:
a computer system built on the recipient machine and comprised of a means to send a message containing contents request information that the recipient wants to get specific contents to the entitlement granter machine, a means to decrypt encrypted digital rights data sent from the entitlement granter machine with the recipient's secret key, a means to send a message containing digital rights data thus decrypted and the encrypted digital rights data with the entitlement granter's digital signature thereon to the contents distributor machine, and a means to decrypt encrypted contents data sent from the contents distributor machine with the recipient's secret key.
a computer system built on the entitlement granter machine and comprised of a means to encrypt digital rights data relevant to the contents request information with the recipient's public key, a means to put the entitlement granter's digital signature generated by using the entitlement granter's secret key to the thus encrypted digital rights data, and a means to send the encrypted digital rights data with the entitlement granter's digital signature thereon to the recipient machine; and
a computer system built on the contents distributor machine and comprised of a means to verify the entitlement granter's digital signature by using the entitlement granter's public key, a means to encrypt the digital rights data with the recipient's public key and make sure that the thus encrypted digital rights data matches with the encrypted digital rights data, and a means to encrypt contents data to be sent to the recipient machine with the recipient's public key and send the thus encrypted contents data to the recipient machine.

9. A contents distribution system having a recipient machine, an entitlement granter machine, and a contents distributor machine interconnected over a communication network, comprising:
a computer system built on the recipient machine and comprised of a means to send a message containing the recipient's public key and contents request information that the recipient wants to get specific contents to the entitlement granter machine, a means to decrypt encrypted digital rights data sent from the entitlement granter machine with the recipient's secret key, a means to send a message containing digital rights data thus decrypted, the encrypted digital rights data with the entitlement granter's digital signature thereon, and the recipient's public key to the contents distributor machine, and a means to decrypt encrypted contents data sent from the contents distributor machine with the recipient's secret key.
a computer system built on the entitlement granter machine and comprised of a means to encrypt digital rights data relevant to the contents request information with the recipient's public key, a means to put the entitlement granter's digital signature generated by using the entitlement granter's secret key to the thus encrypted digital rights data, and a means to send the encrypted digital rights data with the entitlement granter's digital signature thereon to the recipient machine; and
a computer system built on the contents distributor machine and comprised of a means to verify the entitlement granter's digital signature by using the entitlement granter's public key, a means to encrypt the digital rights data with the recipient's public key and make sure that the thus encrypted digital rights data matches with the encrypted digital rights data, and a means to encrypt contents data to be sent to the recipient machine with the recipient's public key and send the thus encrypted contents data to the recipient machine.

10. The contents distribution system according to claim 8, wherein:
the computer system built on the contents distributor machine is further comprised of a means to send an entry form for acquiring information about the recipient to the recipient machine after making sure of encrypted digital rights data matching;
the computer system built on the recipient machine is further comprised of a means to generate an entry form filled with data as a result of that the recipient enters necessary information into the entry form, put digital signature using the recipient's secret key to the entry form filled with data, and send the entry form filled with data with the recipient's digital signature thereon to the contents distributor machine; and
the computer system built on the contents distributor machine is further comprised of a means to verify the recipient's digital signature by using the recipient's public key and then send the contents data encrypted with the recipient's public key to the recipient machine.

11. The contents distribution system according to claim 9, wherein:
the computer system built on the contents distributor machine is further comprised of a means to send an entry form for acquiring information about the recipient to the recipient machine after making sure of encrypted digital rights data matching;
the computer system built on the recipient machine is further comprised of a means to generate an entry form filled with data as a result of that the recipient enters necessary information into the entry form, put digital signature using the recipient's secret key to the entry form filled with data, and send the entry form filled with data with the recipient's digital signature thereon to the contents distributor machine; and
the computer system built on the contents distributor machine is further comprised of a means to verify the recipient's digital signature by using the recipient's public key and then send the contents data encrypted with the recipient's public key to the recipient machine.

12. The contents distribution system according to claim 8, wherein:
the means to send the encrypted digital rights data to the recipient machine, provided on the entitlement granter machine attaches a certificate that is objective authentication of the entitlement granter and includes the entitlement granter's public key to the data to send;
the means to send the digital rights data to the contents distributor, provided on the recipient machine attaches the certificate of the entitlement granter to the data to send; and
the means to verify the entitlement granter's digital signature, provided on the contents distributor machine verifies the certificate of the entitlement granter and uses the entitlement granter's public key derived from the certificate of the entitlement granter when verifying the entitlement granter's digital signature.

13. The contents distribution system according to claim 9, wherein:
the means to send the encrypted digital rights data to the recipient machine, provided on the entitlement granter machine attaches a certificate that is objective authentication of the entitlement granter and includes the entitlement granter's public key to the data to send;
the means to send the digital rights data to the contents distributor, provided on the recipient machine attaches the certificate of the entitlement granter to the data to send; and
the means to verify the entitlement granter's digital signature, provided on the contents distributor machine verifies the certificate of the entitlement granter and uses the entitlement granter's public key derived from the certificate of the entitlement granter when verifying the entitlement granter's digital signature.

14. The contents distribution system according to claim 10, wherein:
the means to send the encrypted digital rights data to the recipient machine, provided on the entitlement granter machine attaches a certificate that is objective authentication of the entitlement granter and includes the entitlement granter's public key to the data to send;
the means to send the digital rights data to the contents distributor, provided on the recipient machine attaches the certificate of the entitlement granter to the data to send; and
the means to verify the entitlement granter's digital signature, provided on the contents distributor machine verifies the certificate of the entitlement granter and uses the entitlement granter's public key derived from the certificate of the entitlement granter when verifying the entitlement granter's digital signature.

15. An entitlement granter machine connected to a recipient machine operated by a recipient who wants to get contents data across a network,
a computer system built on the entitlement granter machine being comprised of a means to receive a message containing contents request information that the recipient want to get specific contents from the recipient machine, a means to encrypt digital rights data relevant to the contents request information with the recipient's public key, a means to put the entitlement granter's digital signature generated by using the entitlement granter's secret key to the thus encrypted digital rights data, and a means to send the encrypted digital rights data with the entitlement granter's digital signature thereon to the recipient machine.

16. An entitlement granter machine connected with a recipient machine operated by a recipient who wants to get contents data across a network,
a computer system built on the entitlement granter machine being comprised of a means to receive a message containing contents request information that the recipient want to get specific contents and the recipient's public key from the recipient machine, a means to encrypt digital rights data relevant to the contents request information with the recipient's public key, a means to put the entitlement granter's digital signature generated by using the entitlement granter's secret key to the thus encrypted digital rights data, and a means to send the encrypted digital rights data with the entitlement granter's digital signature thereon to the recipient machine.

17. The entitlement granter machine according to claim 15, wherein:
the computer system built on the entitlement granter machine is further comprised of a means to extract digital rights data that has been put under management beforehand, based on the contents request information.

18. A contents distributor machine connected with a recipient machine across a network,
a computer system built on the contents distributor machine being comprised of a means to receive digital rights data relevant to contents request information, encrypted digital rights data generated by encrypting the digital rights data with the recipient's public key, and the entitlement granter's digital signature put to the encrypted digital rights data, a means to verify the entitlement granter's digital signature by using the public key of the entitlement granter, a means to encrypt the digital rights data with the recipient' s public key and make sure that the thus encrypted digital rights data matches with received encrypted digital rights data, a means to encrypt contents data to be sent to the recipient machine with the recipient's public key, and a means to send the thus encrypted contents data to the recipient machine.

19. A contents distributor machine connected with a recipient machine across a network,
a computer system built on the contents distributor machine being comprised of a means to receive digital rights data relevant to contents request information, encrypted digital rights data generated by encrypting the digital rights data with the recipient's public key, the entitlement granter's digital signature put to the encrypted digital rights data, and the recipient's public key, a means to verify the entitlement granter's digital signature by using the public key of the entitlement granter, a means to encrypt the digital rights data with the recipient's public key and make sure that the thus encrypted digital rights data matches with received encrypted digital rights data, a means to encrypt contents data to be sent to the recipient machine with the recipient's public key, and a means to send the thus encrypted contents data to the recipient machine.

20. The contents distributor machine according to claim 19, wherein:
the computer system built on the contents distributor machine is further comprised of a means to send an entry form for acquiring information about the recipient to the recipient machine and a means to receive the entry form filled with data with the recipient's digital signature encrypted with the recipient's secret key thereon if the match between the digital rights data encrypted with the recipient's public key and the received encrypted digital rights data has been verified; and
a means to encrypt contents data to be sent to the recipient machine with the recipient's public key if the validity of the recipient's digital signature put to the received form has been verified by using the recipient's public key.
